# EUROPÄISCHE PATENTANMELDUNG

(11) **EP 2 502 694 A1**
(43) Veröffentlichungstag der Anmeldung: **26.09.2012**
(21) Anmeldenummer: 12154421.7
(22) Anmeldetag: 08.02.2012
(51) Int. Cl.: B23B 51/04

(54) **Aufsatz, Werkzeug und Verfahren zur Bohrkernentfernung aus Hammerbohrkronen**

(30) Priorität: 22.03.2011 DE 102011005903
(71) Anmelder: HILTI Aktiengesellschaft, 9494 Schaan (LI)
(72) Erfinder: Hofbrucker, Thomas, 82291 Mammendorf (DE); Meidlein, Jochen, 81371 München (DE)

(57) **Zusammenfassung**

Aufsatz 10 zum Entfernen eines Bohrkerns 90 aus einem Hohlvolumen 71 eines Hohlbohrkronenkörpers 70, aufweisend eine zum Anordnen an einem Aufnahmeschaft 72 ausgebildete Aufsatzhülse 11 mit wenigstens einem Ausstoßelement 12, das zum Eingreifen in das Hohlvolumen 71 des Hohlbohrkronenkörpers 70 und zum Übertragen einer Kraftwirkung auf den Bohrkern 90 ausgebildet ist.

## Beschreibung

### Technisches Gebiet

Die vorliegende Erfindung betrifft eine Vorrichtung, ein Werkzeug, ein System und ein Verfahren zum Entfernen eines Bohrkerns aus einer Hohlbohrkrone, insbesondere einer Hammerbohrkrone.

### Stand der Technik

DD 277 875 A1 offenbart ein Verfahren zum Entfernen von Bohrkernen beim Bohren mit Kernbohrgeräten. Es sieht vor, dass nach dem Bohren und dem Brechen des Bohrkerns in die Bohrkrone ein Keil mit geringer Neigung eingelegt wird. Die Bohrkrone wird dann in den Bohrspalt eingedrückt und der Bohrkern durch den Keil gegen die Innenwand festgeklemmt. Beim Herausziehen der Bohrkrone wird der Bohrkern mitgenommen und anschließend mit einem Stab aus der abgeschraubten Bohrkrone vorsichtig herausgeschlagen.

DE 10 2008 011 483 A1 zeigt einen Bohrer für harte Materialien mit einem Schaft, an dessen Ende ein Bohrkopf angeordnet ist. Der Bohrkopf besitzt eine Bearbeitungsfläche, die seine Stirnfläche ist. In der Mitte dieser Stirnfläche ist ein Loch, in das beim Bearbeiten Material eingedrückt wird. Die Öffnung kann durch den gesamten Schaft hindurchgehen, so dass sich ein Bohrkern von der Rückseite her mit Hilfe eines Stößels, Austreibers oder auch nur eines Stücks Drahts aus dem Bohrer entfernen lässt.

Diese Art der Bohrkernentfernung eines Bohrkerns kann nur bei einem der Werkzeugaufnahme einer Werkzeugmaschine entnommenen Bohrwerkzeug erfolgen. Für das Entfernen eines schwergängigen oder verklemmten Bohrkerns -eine Aufgabe die in der Praxis sehr häufig vorkommt- ist zusätzlich zum Einsatz eines Austreibers auch der Einsatz eines zusätzlichen Schlagwerkzeugs zum Einwirken auf den Austreiber erforderlich. Durch ein Abrutschen dieses Schlagwerkzeugs, kann die Sicherheit des Benutzers beeinträchtigt werden.

EP 1 356 883 A1 offenbart eine Vorrichtung zum Kernbohren, insbesondere in Hohlwänden für den Einsatz von Hohlwanddosen, mit einem verschiebbar gelagerten Auswerfermechanismus, welcher eine beim Bohrvorschub spannbare Auswerferfeder zum selbstständigen Auswerfen des Bohrkerns aufweist. Es kann aber vorkommen, dass die Federkraft der Auswerferfeder nicht ausreicht, um den Bohrkern selbständig auszuwerfen. Dies ist insbesondere beim Auswerfen von Bohrkernen hoher Dichte, wie beispielsweise Beton oder Granit, der Fall.

Das Entfernen von Bohrkernen aus einer Hohlbohrkrone gemäß dem vorbekannten Stand der Technik ist demnach noch verbesserbar. Der Anwender ist insbesondere im Falle eines in der Hohlbohrkrone verklemmten Bohrkerns darauf angewiesen, die Hohlbohrkrone solange auf ein hartes Material zu schlagen, bis der Bohrkern aus der Hohlbohrkrone heraus wandert, oder, im Falle des rückseitiges Entfernens gemäß des Standes der Technik, ein Schlagwerkzeug mit einer hohen Abrutschgefahr einzusetzen. Dies kann zum einen die Hohlbohrkrone beschädigen, zum anderen ein Sicherheitsrisiko für den Benutzer darstellen.

### Darstellung der Erfindung

An dieser Stelle setzt die Erfindung an, deren Aufgabe es ist, eine Vorrichtung, ein Werkzeug, ein System und ein Verfahren anzugeben, mittels welcher ein Bohrkern sicher aus einer Hohlbohrkrone entfernt werden kann ohne diese zu beschädigen.

Die Aufgabe wird betreffend der Vorrichtung durch einen Aufsatz zum Entfernen eines Bohrkerns aus einem Hohlbohrkronenkörper mit den Merkmalen des Anspruchs 1, betreffend des Werkzeugs durch ein weitergebildetes Werkzeug nach Anspruch 10, bezüglich des Systems durch ein System aus einem Werkzeug und einem Aufsatz nach Anspruch 12, und bezüglich des Verfahrens durch ein Verfahren zum Entfernen eines Bohrkerns aus Hohlbohrkronenkörper nach Anspruch 13, gelöst.

Die Erfindung geht von der Überlegung aus, dass eine bisher bekannte Vorgehensweise zum Entfernen des Bohrkerns die Hohlbohrkrone beschädigen kann. Insbesondere kann bei bisher bekannten Vorgehensweisen mit im Hammerbohrer eingespannter Hammerbohrkrone auch die Lagerung des Bohrhammers beschädigt werden. Darüber hinaus geht die Erfindung von der Überlegung aus, dass sich ein manuelles Austreiben des Bohrkerns gemäß dem Stand der Technik möglichst erübrigen sollte. Eine Vorrichtung, ein Werkzeug, ein System und ein Verfahren zum Entfernen eines Bohrkerns aus einer Hohlbohrkrone sollte mit vergleichsweise hoher Benutzersicherheit bereitgestellt werden.

Die Erfindung hat erkannt, dass durch Bereitstellen eines Aufsatzes zum Entfernen eines Bohrkerns aus einem Hohlbohrkronenkörper eine sichere Entfernung eines Bohrkerns aus dem Hohlbohrkörper ermöglicht wird. Der Aufsatz weist dazu auf: eine zum Anordnen an einem Aufnahmeschaft ausgebildete Aufsatzhülse mit wenigstens einem Ausstoßelement, das zum Eingreifen in das Hohlvolumen des Hohlbohrkronenkörpers und zum Übertragen einer Kraftwirkung auf den Bohrkern ausgebildet ist. Damit kann ein Bohrkern sicher aus einer Hohlbohrkrone entfernt werden, ohne die Bohrkrone zu beschädigen. Die Erfindung hat ferner erkannt, dass diese Vorteile mit einem erfindungsgemässen Werkzeug erreicht werden können. Das Werkzeug umfasst: einen Hohlbohrkörper, einen Aufnahmeschaft und einen Einspannbereich, wobei der Hohlbohrkörper eine aufnahmeseitige Stirnfläche umfasst, die wenigstens eine Öffnung für den Eingriff eines Ausstoßelements aufweist.

Die Erfindung hat weiterhin erkannt, dass ein, insbesondere zur Nutzung des erfindungsgemässen Aufsatzes und des erfindungsgemässen Werkzeugs ausgelegtes, Verfahren zum Entfernen eines Bohrkerns aus einem Hohlbohrkronenkörper die Schritte aufweist:
- Anordnen einer Aufsatzhülse mit wenigstens einem Ausstoßelement an einem Aufnahmeschaft, so dass das Ausstoßelement in ein Hohlvolumen des Hohlbohrkronenkörpers eingreift und auf dem Bohrkern ansteht,
- Anordnen eines Schlagstücks am Aufnahmeschaft zwischen einer Abstandsposition und einer Anschlagfläche
- Bewegen des Schlagstücks zwischen der Abstandsposition und der Anschlagfläche, derart, dass eine Kraft vom Schlagstück über die Aufsatzhülse und/oder das Ausstoßelement auf den im Hohlbohrkronenkörper befindlichen Bohrkern übertragen, und damit der Bohrkern aus dem Hohlbohrkronenkörper ausgestoßen wird.

Auf diese Weise kann ein Bohrkern sicher aus einer Hohlbohrkrone entfernt werden und unter Vermeidung von Beschädigungen der Hohlbohrkrone und Risiken für den Benutzer. Beim erfindungsgemäßen Verfahren kann ein Entfernen eines Bohrkerns aus einem Hohlbohrkronenkörper zum Einen durch rückseitiges Aufstecken der Aufsatzhülse und/oder des Schlagstücks, oder aber auch durch seitliches Aufstecken der Aufsatzhülse und/oder des Schlagstücks erfolgen. Das seitliche Aufstecken ist dabei vorteilhaft für ein schnelles Entfernen des Bohrkerns. Das rückseitige Aufstecken eine höhere Führungstreue erlaubt, und damit für den Einsatz zur Entfernung von Bohrkernen geringerer Abmessungen geeignet ist.

Vorteilhafte Weiterbildungen der Erfindung sind den Unteransprüchen zu entnehmen, welche im Einzelnen vorteilhafte Möglichkeiten angeben, das oben erläuterte Konzept im Rahmen der Aufgabenstellung sowie hinsichtlich weiterer Vorteile zu realisieren.

Im Rahmen einer bevorzugten konstruktiven Weiterbildung ist die Aufsatzhülse als Zentrierhülse ausgebildet. Dies hat den Vorteil, dass das Ausstoßelement, das zum Eingreifen in das Hohlvolumen des Hohlbohrkronenkörpers und zum Übertragen einer Kraftwirkung auf den Bohrkern ausgebildet ist, stets in einer definierten Position zum Eingriff gebracht werden kann. Diesen Gedanken weiterverfolgend kann das Ausstoßelement als Ausstoßstift ausgebildet sein.

Zweckmäßigerweise umfasst der Aufsatz weiter ein Schlagstück zum Anordnen und zum geführten Bewegen zwischen einer Abstandsposition und einer Anschlagfläche. In einer ersten konstruktiven Weiterbildung ist das Schlagstück zum Übertragen einer Kraftwirkung auf die Aufsatzhülse ausgebildet.

In einer alternativen konstruktiven Weiterbildung ist das Schlagstück zusätzlich oder alternativ zum Übertragen einer Kraftwirkung direkt auf das Ausstoßelement ausgebildet. Durch die vorteilhafte Bereitstellung eines Schlagstücks können höhere Kräfte zum Ausstoßen des Bohrkerns aus dem Hohlbohrkörper erzielt werden.

Das Ausstoßelement kann form-, kraft- oder stoffschlüssig mit der Aufsatzhülse verbunden ist. In diesem Fall wird die Kraft vom Schlagstück zunächst auf die Aufsatzhülse und dann über das Ausstoßelement auf den Bohrkern ausgeübt.

Es kann das Schlagstück auch derart ausgebildet sein, dass die Kraftwirkung direkt auf das Ausstoßelement übertragen wird. In diesem Fall dient die Aufsatzhülse als Führungselement für das oder die Ausstoßelemente. Der Vorteil dieser Ausführung ist, dass bei besonders harten Bohrkernen und einem demzufolge ggfs. hohen Verschleiß der Ausstoßelemente, diese relativ einfach ausgetauscht werden können.

Im Rahmen einer weiteren besonders bevorzugten konstruktiven Weiterbildung weist der Aufsatz eine Mehrzahl von Ausstoßelementen auf, die ringförmig auf einer Hülsenstirnfläche der Aufsatzhülse angeordnet sind. Dies hat den Vorteil, dass eine aufzubringende Kraft an mehreren Stellen über die Ausstoßelemente auf den Bohrkern übertragen werden können. Der Bohrkern kann damit gleichmäßig und verkantungsfrei aus dem Hohlbohrkörper entfernt werden. Entsprechend kann das Werkzeug in einer konstruktiven Weiterbildung mit einen Hohlbohrkörper aufweisen, der eine Mehrzahl aufnahmeseitiger Durchgangsöffnungen umfasst, wobei die Durchgangsöffnungen ringförmig auf der Stirnfläche angeordnet sind. Das Werkzeug ist damit zweckmäßig für den Einsatz zusammen mit einem Aufsatz zum Entfernen eines Bohrkerns ausgestattet.

Zweckmäßigerweise weist die Aufsatzhülse des Aufsatzes einen Hülsenschlitz in axialer Richtung auf. Ebenso kann das Schlagstück einen Langschlitz in axialer Richtung aufweisen. Diese konstruktive Weiterbildung hat den Vorteil, dass die Aufsatzhülse und/oder das Schlagstück auch bei im Bohrhammer eingespannter Hohlbohrkrone, schnell und zuverlässig aufgesetzt werden können. Dies stellt bei hohem Bohraufkommen eine Zeitersparnis dar.

### Ausführungsbeispiele

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsbeispiele sowie anhand der Zeichnung; diese zeigen in schematischer Darstellung:
Fig. 1: einen Längsschnitt eines Ausführungsbeispiels eines Aufsatzes gemäß einer bevorzugten Ausführungsform;
Fig. 2: einen Längsschnitt eines Aufsatzes und eines Werkzeugs in einem System gemäß einer bevorzugten Ausführungsform;
Fig. 3A, Fig. 3B: einen Querschnitt von zwei Varianten der Ausführungsform eines Aufsatzes und eines Werkzeugs in einem System;
   und
Fig. 4: einen Ablaufplan eines bevorzugten Verfahrens zum Entfernen eines Bohrkerns aus einem Hohlbohrkronenkörper.

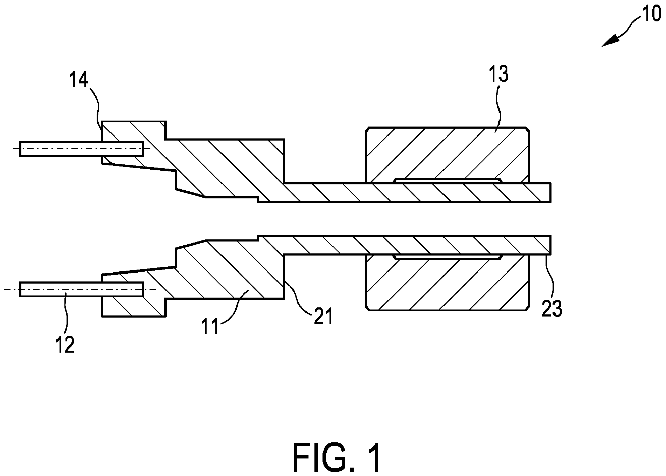

Fig. 1 zeigt einen Aufsatz 10 in einem Längsschnitt gemäß einer bevorzugten Ausführungsform. Der Aufsatz 10 umfasst dabei eine Aufsatzhülse 11, ein Schlagstück 13 und zwei Ausstoßelemente 12. Dabei weist die Aufsatzhülse 11 eine plane Hülsenstirnfläche 14 und eine plane Anschlagfläche 21 auf. Die zwei Ausstoßelemente 12 sind dabei auf der Hülsenstirnfläche 14 der Aufsatzhülse 11 angeordnet, bzw. mittels Presspassung in diese eingebracht. Das Schlagstück 13 ist in Achse zur Aufsatzhülse 10 zwischen einer Abstandsposition 23 und einer Anschlagfläche 21 angeordnet. Im Sinne des Verfahrens zum Entfernen eines Bohrkerns aus einer Hohlbohrkronenkörper lässt sich das Schlagstück 13 in der Abstandsposition 23 und der Anschlagfläche 21 geführt bewegen. Trifft das Schlagstück 13 auf die Anschlagfläche 21, so wird eine Kraft vom Schlagstück auf die Aufsatzhülse 11 übertragen, um über die Ausstoßelemente 12 auf den nicht gezeigten Bohrkern übertragen zu werden. Durch wiederholtes Bewegen des Schlagstücks 13 zwischen der Abstandsposition 23 und der Anschlagfläche 21 wird in der Folge stoßweise eine Kraftwirkung auf den Bohrkern ausgeübt.

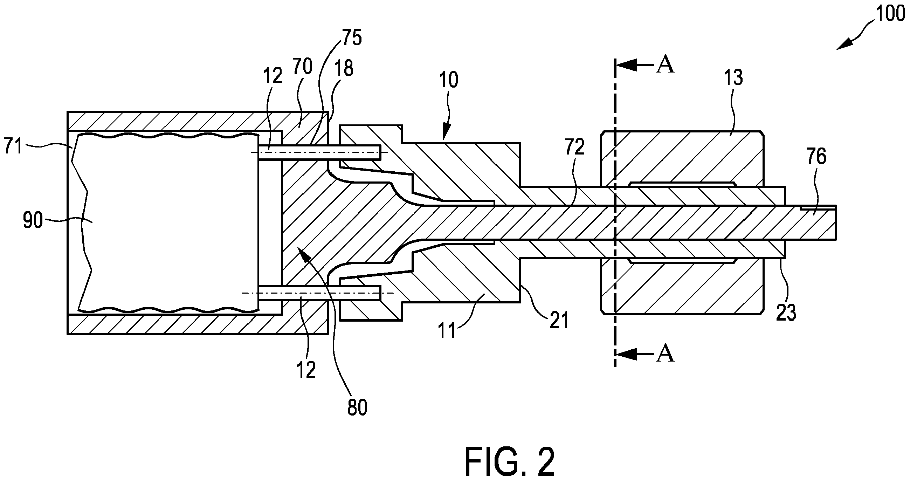

Fig. 2 zeigt ein System 100 umfassend den Aufsatz aus Fig. 1 und ein Werkzeug 80. Das Werkzeug 80 umfasst dabei einen Hohlbohrkronenkörper 70 mit einem Aufnahmeschaft 72 und einem Einspannbereich 76. Ein Bohrkern 90 ist im Hohlvolumen 71 des Hohlbohrkronenkörpers 70 vorhanden. Der Hohlbohrkronenkörper 70 weist dabei eine aufnahmeseitige Stirnfläche 18 und zwei aufnahmeseitige Durchgangsöffnungen 75 auf, die als Durchgangsbohrungen ausgebildet sind. Die Aufsatzhülse 11 ist am Aufnahmeschaft 72 derart angeordnet, dass die zwei Ausstoßelemente 12 durch die Durchgangsbohrungen ausgebildeten Durchgangsöffnungen 75 hindurchragen und auf dem Bohrkern 90 anstehen. Die Passungen zwischen Durchgangsöffnungen 75 und Ausstoßelement 12 sind dabei Spielpassungen. Wie bereits aus Fig. 1 ersichtlich ist das Schlagstück 13 zwischen einer Abstandsposition 23 und einer Anschlagfläche 21 auf der Aufsatzhülse 11 angeordnet. Zur Einspannung in einen Bohrhammer weist der Aufnahmeschaft 72 einen Einspannbereich 76 auf.

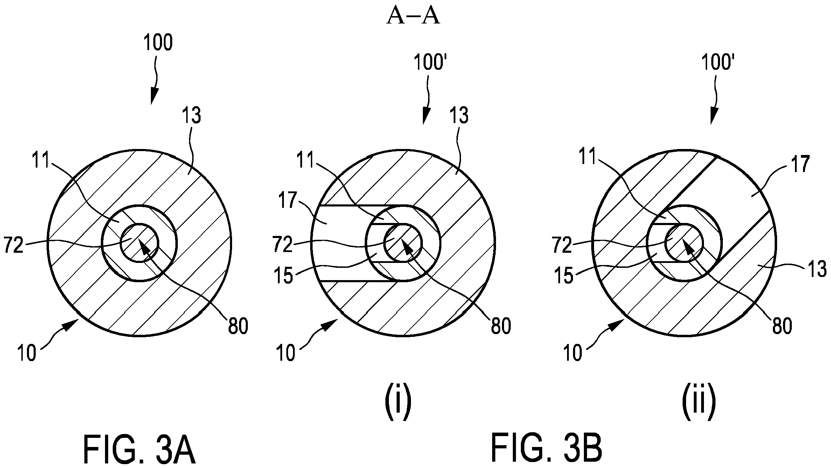

Fig. 3A und Fig. 3B zeigen einen Querschnitt A-A, dessen Verlauf in Fig. 2 eingezeichnet ist. Fig. 3B zeigt dabei eine Variante der Fig. 2 dargestellten Ausführungsform, insofern ist der ein Fig. 2 eingezeichnete Schnittverlauf A-A nur exemplarisch zu verstehen. In der in Fig. 3A gezeigten Ausführungsform eines Systems 100, sind die Aufsatzhülse 11 und das Schlagstück 13 schlitzfrei. Verfahrensgemäss sind dementsprechend die Aufsatzhülse 11 und das Schlagstück 13 durch rückseitiges Aufstecken angeordnet. Wie aus der Schnittdarstellung ersichtlich umfasst die Aufsatzhülse 11 dabei den Aufnahmeschaft 72 vollständig, und wird selbst vollständig vom Schlagstück 13 umfasst. Die Passungen zwischen der Aufsatzhülse 11 und dem Aufnahmeschaft 72, bzw. der Aufsatzhülse 11 und dem Schlagstück 13 sind dabei Spielpassungen. Fig. 3B zeigt einen Querschnitt einer anderen Ausführungsform, namentlich ein System 100'. Die Aufsatzhülsen 11 weisen dabei jeweils einen Hülsenschlitz 15 in axialer Richtung zur Aufsatzhülse 11 auf. Die beiden Schlagstücke 13 weisen jeweils einen Langschlitz 17 in axialer Richtung des Schlagstücks 13 auf. Fig. 3B zeigt dabei in Ansicht (i) die Orientierung der Aufsatzhülse 11 und des Schlagstücks 13 unmittelbar nach ihrem seitlichen Aufstecken auf den Aufnahmeschaft 72. Fig. 3B zeigt in Ansicht (ii) für die gerade beschriebene Ausführungsform eine Anordnung mit um die Längsachse verdrehtem Schlagstück 13. Das Schlagstück 13 ist dabei derart angeordnet, dass der in der Aufsatzhülse 11 befindliche Hülsenschlitz 15 im Wesentlichen durch die Wandung des Schlagstücks 13 verdeckt ist. Damit kann wirksam verhindert werden, dass zumindest die Aufsatzhülse während der Betätigung des Aufsatzes seitlich abfällt.

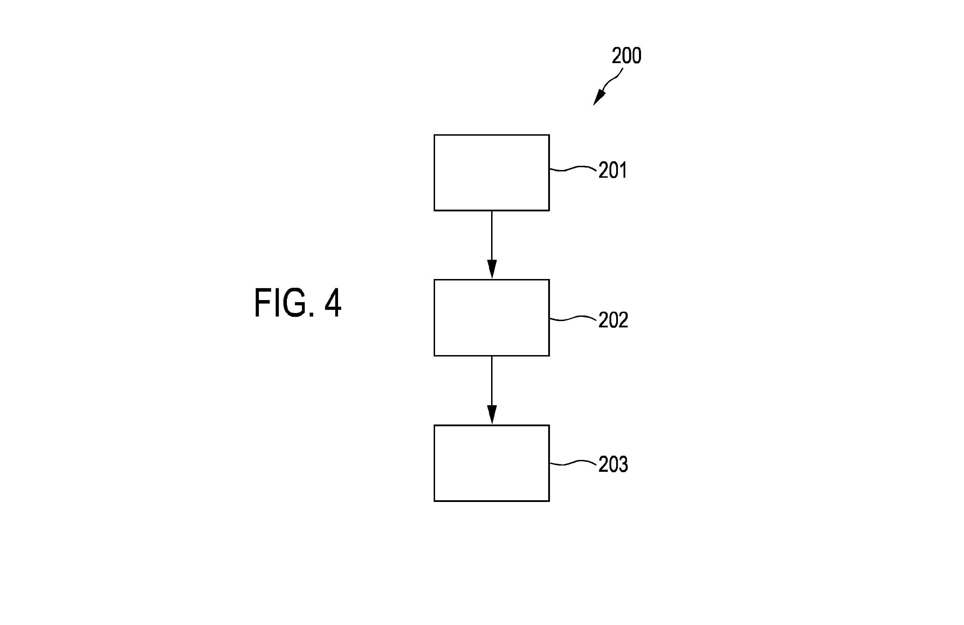

Fig. 4 verdeutlicht mittels eines Ablaufplans ein Verfahren zum Entfernen eines Bohrkerns aus einem Hohlbohrkronenkörper. Im Schritt 201 wird dabei zunächst eine wenigstens ein Ausstoßelement 12 aufweisende Aufsatzhülse 11 an einem Aufnahmeschaft 72 eines weiter einen Hohlbohrkronenkörper 70 und einen Einspannbereich 76 umfassenden Werkzeugs 80 durch seitliches Aufstecken angeordnet. In angeordneter Position greift das Ausstoßelement 12 in ein Hohlvolumen 71 des Hohlbohrkronenkörpers 70 ein und steht auf dem Bohrkern 90 an. Im Schritt 202 wird ein Schlagstück 13 seitlich auf die Aufsatzhülse 11 zwischen einer Abstandsposition 23 und einer Anschlagfläche 21 aufgesteckt. Im Schritt 203 wird das Schlagstück 13 zwischen der Abstandsposition 23 und der Anschlagfläche 21 derart bewegt, dass eine Kraft vom Schlagstück 13 zunächst auf die Aufsatzhülse 11 und dann von der Aufsatzhülse 11 über das Ausstoßelement 12 auf den im Hohlbohrkronenkörper 70 befindlichen Bohrkern 90 übertragen wird- dadurch wird der Bohrkern aus dem Hohlbohrkronenkörper 70 ausgestoßen. Der Schritt 203 -Bewegen des Schlagstücks 13 zwischen der Abstandsposition 23 und der Anschlagfläche 21- wird wenigstens einmal, erwartungsgemäß einige Male, ausgeführt.

## Patentansprüche

1. Aufsatz (10) zum Entfernen eines Bohrkerns (90) aus einem Hohlvolumen (71) eines Hohlbohrkronenkörpers (70), aufweisend eine zum Anordnen an einem Aufnahmeschaft (72) ausgebildete Aufsatzhülse (11) mit wenigstens einem Ausstoßelement (12), das zum Eingreifen in das Hohlvolumen (71) des Hohlbohrkronenkörpers und zum Übertragen einer Kraftwirkung auf den Bohrkern (90) ausgebildet ist.

2. Aufsatz (10) nach Anspruch 1, **dadurch gekennzeichnet, dass** die Aufsatzhülse (11) als Zentrierhülse ausgebildet ist.

3. Aufsatz (10) nach Anspruch 1 oder 2, **dadurch gekennzeichnet, dass** das Ausstoßelement (12) als Ausstoßstift ausgebildet ist.

4. Aufsatz (10) nach einem der Ansprüche 1 bis 3 **gekennzeichnet durch** ein Schlagstück (13) zum Anordnen und zum geführten Bewegen zwischen einer Abstandsposition (23) und einer Anschlagfläche (21).

5. Aufsatz (10) nach Anspruch 4, **dadurch gekennzeichnet, dass** das Schlagstück (13) zum Übertragen einer Kraftwirkung auf die Aufsatzhülse (11) ausgebildet ist.

6. Aufsatz (10) nach Anspruch 4, **dadurch gekennzeichnet, dass** das Schlagstück (13) zum Übertragen einer Kraftwirkung auf das Ausstoßelement (12) ausgebildet ist.

7. Aufsatz (10) nach einem der Ansprüche 1 bis 6, **dadurch gekennzeichnet, dass** der Aufsatz (10) eine Mehrzahl von Ausstoßelementen (12) aufweist, die ringförmig auf einer Hülsenstirnfläche (14) der Aufsatzhülse (11) angeordnet sind.

8. Aufsatz (10) nach einem der Ansprüche 1 bis 7, **dadurch gekennzeichnet, dass** die Aufsatzhülse (11) einen Hülsenschlitz (15) in axialer Richtung aufweist.

9. Aufsatz (10) nach Anspruch 4, **dadurch gekennzeichnet, dass** das Schlagstück (13) einen Langschlitz (17) in axialer Richtung aufweist.

10. Werkzeug (80) mit einem Hohlbohrkronenkörper (70), einem Aufnahmeschaft (72) und einem Einspannbereich (76), **dadurch gekennzeichnet, dass** der Hohlbohrkronenkörper (70) eine aufnahmeseitige Stirnfläche (18) umfasst, die wenigstens eine Durchgangsöffnung (75) für den Eingriff eines Ausstoßelements (12), aufweist.

11. Werkzeug (80) nach Anspruch 10, **dadurch gekennzeichnet, dass** der Hohlbohrkronenkörper (70) eine Mehrzahl aufnahmeseitiger Durchgangsöffnungen (75) umfasst, wobei die Durchgangsöffnungen (75) ringförmig auf der Stirnfläche angeordnet sind.

12. System (100, 100') aus einem Werkzeug (80) nach Anspruch 10 oder 11 und einem Aufsatz (10) nach einem der Ansprüche 1 bis 9, **dadurch gekennzeichnet, dass** der Hohlbohrkronenkörper (70) ein Durchgangsloch (75) umfasst, das derart gebildet ist, dass ein Ausstoßelement (12) in ein Hohlvolumen (71) des Hohlbohrkronenkörpers (70) zum Übertragen einer Kraftwirkung auf einen Bohrkern (90) in Eingriff gebracht werden kann.

13. Verfahren (200) zum Entfernen eines Bohrkerns (90) aus einem Hohlbohrkronenkörper (70), aufweisend die Schritte:
- Anordnen einer Aufsatzhülse (11) mit wenigstens einem Ausstoßelement (12) an einem Aufnahmeschaft (72), so dass das Ausstoßelement (12) in ein Hohlvolumen (71) des Hohlbohrkronenkörpers (70) eingreift und auf dem Bohrkern (90) ansteht,
- Anordnen eines Schlagstücks (13) an der Aufsatzhülse (11) zwischen einer Abstandsposition (23) und einer Anschlagfläche (21)
- Bewegen des Schlagstücks (13) zwischen der Abstandsposition (23) und der Anschlagfläche (21), derart, dass eine Kraft vom Schlagstück (13) über die Aufsatzhülse (11) und/oder das Ausstoßelement (12) auf den im Hohlbohrkronenkörper (70) befindlichen Bohrkern (90) übertragen, und damit der Bohrkern aus dem Hohlbohrkronenkörper (70) ausgestoßen, wird.

14. Verfahren nach Anspruch 13, **dadurch gekennzeichnet, dass** das Anordnen der Aufsatzhülse (11) und/oder des Schlagstücks (13) durch seitliches Aufstecken erfolgt.

15. Verfahren (200) nach Anspruch 14, **dadurch gekennzeichnet, dass** das Anordnen der Aufsatzhülse (11) und/oder des Schlagstücks (13) durch rückseitiges Aufstecken erfolgt.
